# EUROPÄISCHE PATENTSCHRIFT

(11) **EP 3 803 148 B1**
(45) Veröffentlichungstag und Bekanntmachung des Hinweises auf die Patenterteilung: **07.05.2025**
(21) Anmeldenummer: 19726898.0
(22) Anmeldetag: 20.05.2019
(51) Int. Cl.: F16F 1/371, F16F 1/373

(54) **GUMMIELASTISCHE LAGERUNG FÜR EINE ANTRIEBSEINHEIT IN EINEM KRAFTFAHRZEUG**
RUBBER MOUNTING FOR A DRIVE UNIT IN A MOTOR VEHICLE
SUPPORT ANTIVIBRATOIRE EN CAOUTCHOUC POUR UNE UNITÉ MOTRICE DANS UN VÉHICULE

(30) Priorität: 06.06.2018 DE 102018004470
(43) Veröffentlichungstag der Anmeldung: 14.04.2021
(73) Patentinhaber: Kiekert AG, 42579 Heiligenhaus (DE)
(72) Erfinder: NEIDHARDT, Andreas, 38524 Sassenburg (DE)
(74) Vertreter: Kiekert AG Patentabteilung
(86) Internationale Anmeldenummer: PCT/DE2019/100447
(87) Internationale Veröffentlichungsnummer: WO 2019/233517

(56) Entgegenhaltungen:
- EP-A2- 1 703 146
- WO-A1-01/92752
- JP-A- S6 159 039
- US-A- 2 951 674
- US-A- 4 643 386

## Beschreibung

Die Erfindung betrifft ein gummielastisches Lager zur entkoppelten Befestigung eines Bauteils, insbesondere einer Antriebseinheit, in einem Kraftfahrzeug, wobei das elastische Lager zwischen einem Gehäuse des Bauteils und einer Trägerkomponente montierbar ist und das elastische Lager zumindest mittelbar in der Trägerkomponente formschlüssig haltbar ist.

Um den Komfort in heutigen Kraftfahrzeugen zu steigern, werden mehr und mehr zumeist elektrisch unterstützte Kraftfahrzeug-Aggregate eingesetzt, die beispielsweise ein Schließen und/oder Öffnen einer Schließeinrichtung unterstützen oder beispielsweise eine Kraftfahrzeugtür oder -klappe zumindest bereichsweise öffnen oder schließen. Diese Kraftfahrzeug-Aggregate verfügen dann über einen elektrisch angetriebenen Motor, der mittelbar oder unmittelbar mit der Schließ- oder Betätigungseinrichtung verbunden ist. Zum Beispiel aus Zugänglichkeits- oder Platzgründen kann ein solches Kraftfahrzeug-Aggregat auch beabstandet von zum Beispiel einer Schließeinrichtung angeordnet sein, und beispielsweise mittels eines Bowdenzugs mit dem Kraftfahrzeugschloss verbunden sein.

Bei dem Motor handelt es sich im Allgemeinen um einen Elektromotor. Als von dem Motor bzw. Elektromotor beaufschlagbare Kraftfahrzeug-Aggregate kommen beispielsweise Spiegel, Sitze, Lenksäulen, Fenster oder Zuzieheinrichtungen in Frage. Besonders bevorzugt werden Kraftfahrzeugtüraggregate mit Hilfe des Motors angetrieben und betätigt. Hierbei handelt es sich um den beispielhaft bereits angesprochenen Außenspiegel oder auch andere in oder an der Kraftfahrzeugtür angebrachte und mit Hilfe des Motors zu verstellende Elemente. Ganz besonders bevorzugt wird der Motor zur Betätigung bzw. Beaufschlagung einer Zuzieh- und/oder Öffnungseinrichtung in oder an einem Kraftfahrzeugschließsystem eingesetzt.

In diesem Zusammenhang ist die fragliche Antriebseinheit üblicherweise als externe Antriebseinheit ausgebildet, arbeitet also regelmäßig über einen Bowdenzug oder ein anderes Verbindungsmittel auf die demgegenüber örtlich getrennt angeordnete Zuzieh- und/oder Öffnungseinrichtung. Eine solche Zuzieh- und/oder Öffnungseinrichtung dient im Allgemeinen dazu, die Kraftfahrzeugtür von beispielsweise einer Vorschließstellung in eine Hauptschließstellung motorisch zu überführen. Dadurch reicht es aus, wenn ein Bediener die fragliche Kraftfahrzeugtür lediglich in die Vorschließstellung oder mit anderen Worten eine Vorraststellung verbringt. Die Einnahme der Hauptschließstellung oder mit anderen Worten Hauptraststellung erfolgt im Anschluss hiernach automatisch und wird mit Hilfe des Motors der externen Antriebseinheit vollzogen.

Daneben sind grundsätzlich auch motorisch beaufschlagte Öffnungseinrichtungen für das Kraftfahrzeugtürschloss bekannt. Diese sorgen dafür, dass die Kraftfahrzeugtür motorisch ausgestellt wird. Solche Zuzieh- und/oder Öffnungseinrichtungen kommen überwiegend bei hochpreisigen Automobilen zum Einsatz und dienen primär der Komfortverbesserung. Auch Sicherheitsaspekte spielen zunehmend eine Rolle. Denn bei einem Kraftfahrzeug mit beispielsweise Zuziehhilfe ist immer gewährleistet, dass sich die zugehörige Kraftfahrzeugtür im Fahrbetrieb in ihrer Hauptraststellung befindet, in welcher die Kraftfahrzeuginsassen mit maximaler Sicherheit geschützt sind. Ein Beispiel für eine solche Zuzieh- und/oder Öffnungseinrichtung wird in der DE 100 48 051 A1 beschrieben.

Ferner kennt man Zuziehhilfen aus der Praxis, die wie allgemein üblich innerhalb der Kraftfahrzeugtür angebracht werden. Dabei stellt sich zunehmend das Problem, von dem Motor zwangsläufig verursachte Geräusche vom Innenraum zu entkoppeln, somit einen möglichst geräuscharmen Betrieb zu gewährleisten.

Aus der DE 20 2010 003 409 U1 ist eine Kraftfahrzeugtür mit einem inneren Strukturelement und wenigstens einem Tragelement bekannt geworden, wobei das Tragelement in wenigstens einem Befestigungspunkt an das Strukturelement angeschlossen ist und wobei das Tragelement zur relativen Einnahme einer Einbauposition schwenkbeweglich gelagert ist. Auf dem Tragelement ist ein Kraftfahrzeug-Aggregat mittels gummielastischer Lager befestigt, wobei das Kraftfahrzeug-Aggregat über einen Bowdenzug mit einer Schließeinrichtung verbunden ist.

Um eine möglichst geräuscharme und gleichzeitig sichere Lagerung eines Kraftfahrzeug-Aggregates zu erzielen, ist aus der gattungsbildenden DE 20 2008 010 051 U1 eine Antriebseinheit für ein Kraftfahrzeug-Aggregat bekannt geworden, bei der das Kraftfahrzeug-Aggregat in zumindest einem gummielastischen Lager zur Festlegung des Motors an einer Basis befestigt ist. Das Lager weist dabei in Axialrichtung und/oder Radialrichtung unterschiedliche Federkonstanten auf, so dass auch unterschiedlichste dynamische Beanspruchungen auf das Kraftfahrzeug-Aggregat eliminierbar sind und einen geräuscharmen Lauf des Motors gewährleisten können. Aus der US 2 951 674 A ist ein gummielastisches Lager zur entkoppelten Befestigung eines Bauteils, wobei das gummielastische Lager zwischen einem Gehäuse des Bauteils und einer Trägerkomponente montierbar ist und das gummielastische Lager zumindest mittelbar in der Trägerkomponente haltbar ist und wobei ein Fügehilfsmittel zur sicheren Fügung einer formschlüssigen Verbindung mit der Trägerkomponente vorgesehen ist. Der Erfindung liegt das technische Problem zugrunde, eine derartige Antriebseinheit für ein Kraftfahrzeug-Aggregat zu verbessern. Darüber hinaus ist es Aufgabe der Erfindung, eine leichte Montage in das Kraftfahrzeug zu ermöglichen, wobei gleichzeitig eine Verbesserung der Akustik gewährleistet werden soll. Letztlich ist es Aufgabe der Erfindung, eine konstruktiv einfache und kostengünstige Lösung bereitzustellen.

Die Erfindung geht aus von einem gummielastischen Lager zur entkoppelten Befestigung eines Bauteils, insbesondere einer Antriebseinheit, in einem Kraftfahrzeug, wobei das elastische Lager zwischen einem Gehäuse des Bauteils und einer Trägerkomponente montierbar ist und das elastische Lager zumindest mittelbar in der Trägerkomponente formschlüssig haltbar ist, wobei ein Fügehilfsmittel für das Lager vorgesehen ist, so dass ein sicheres Fügen, insbesondere Einfügen, der formschlüssigen Verbindung mit der Trägerkomponente erzielbar ist, wobei das elastische Lager hohlzylinderförmig aufgebaut ist und eine als geschlossene Hohlzylinderform ausgebildete Vertiefung aufweist und das Fügehilfsmittel zumindest bereichsweise in die Vertiefung hineinreicht. Erfindungsgemäß endet das Fügehilfsmittel mit einem Abstand zu einem Ende der Vertiefung endet, wobei der Abstand zwischen dem Fügehilfsmittel und dem Ende der Vertiefung auf die Elastizität des elastischen Lagers abgestimmt ist, so dass das elastische Lager maximal verformt werden kann. Durch den erfindungsgemäßen Aufbau des gummielastischen Lagers ist nun die Möglichkeit geschaffen, die Montage des gummielastischen Lagers zu vereinfachen und ein sicheres Fügen in die Trägerkomponente zu erzielen.

Insbesondere dient das Fügehilfsmittel dabei dazu, die Verbindung mit der Trägerkomponente zu erleichtern, wobei mittels des Fügehilfsmittels eine unmittelbare Kraft in den Bereich des gummielastischen Lagers einleitbar ist, der mit der Trägerkomponente verbindbar ist. Mit anderen Worten kann während des Einfügens des gummielastischen Lagers in die Trägerkomponente mittels des Fügehilfsmittels eine direkte Kraft auf das gummielastische Lager ausgeübt werden und insbesondere auf den Teil des gummielastischen Lagers, der mit der Trägerkomponente verbunden wird. Dabei ist das gummielastische Lager zumindest zweiteilig, vorzugsweise dreiteilig noch bevorzugter vierteilig aufgebaut. Ein erster Teil des gummielastischen Lagers ist mit dem Gehäuse der Antriebseinheit verbunden und ein zumindest zweiter Teil des gummielastischen Lagers ist mit der Trägerkomponente verbindbar.

Bei einem mehrteiligen Aufbau des gummielastischen Lagers kann beispielsweise eine Verlängerung, ein Ziehharmonikaartiger Zwischenteil und/oder eine Verstärkungsrippe zwischen dem ersten und zweiten Teil des gummielastischen Lagers angeordnet sein. Diese Zwischenelemente sind hier in ihrer Funktion lediglich beispielhaft beschrieben, es können natürlich je nach Anforderung an die gummielastische Lagerung beliebige, auch konstruktiv bedingte Ausgestaltungen zwischen dem ersten und zweiten Teil des gummielastischen Lagers angeordnet sein. Wesentlich für die Erfindung ist, dass mittels des Fügehilfsmittels ausgehend vom ersten Teil des gummielastischen Lagers eine Kraftkomponente unmittelbar in den zweiten Teil des gummielastischen Lagers einleitbar ist. Das Fügehilfsmittel kann somit als sekundäres Kraftübertragungsmittel angesehen werden, wobei das Fügehilfsmittel neben dem grundsätzlichen Aufbau des gummielastischen Lagers eine zweite Kraftkomponente vom ersten Teil des gummielastischen Lagers auf den zweiten Teil des gummielastischen Lagers überträgt bzw. übertragen kann.

Als Antriebseinheit für ein Kraftfahrzeug-Aggregat sind wie vorstehend bereits beschrieben, elektrisch angetriebene Motoren, die in Kombination mit einem Getriebe zum Beispiel einen Bowdenzug betätigen können oder bei denen der Motor mittelbar oder unmittelbar zum Beispiel auf eine Bewegungseinrichtung im Kraftfahrzeug wirkt, umfasst. Antriebseinheiten können zum Beispiel einen Außenspiegel antreiben, eine Seitenscheibe bewegen oder eine Tür- oder Klappenbewegung unterstützen, um nur einige Beispiele von Einsatzgebieten einer Antriebseinheit für ein Kraftfahrzeug-Aggregat zu nennen. Bevorzugt kommt die Antriebseinheit für eine Zuzieh- und/oder Öffnungseinheit in oder an einem Kraftfahrzeugschloss zum Einsatz.

Als Motoren werden bevorzugt elektrische Motoren eingesetzt. Elektrische Motoren bieten den Vorteil, dass die benötigte Energie im Kraftfahrzeug bereitstellbar ist und somit eine Spannungsversorgung leicht realisierbar ist. Darüber hinaus können Elektromotoren an unterschiedliche Anforderungen leicht angepasst werden und unter Zuhilfenahme zum Beispiel eines Getriebes, wie beispielsweise ein Schneckengetriebe, große Übersetzungen gewährleisten und unterschiedlichste Stell- oder Schwenkbewegungen mit geringen oder großen Kräften zur Verfügung stellen. Darüber hinaus bieten elektrische Antriebe einen Kostenvorteil, so dass eine konstruktiv günstige Lösung ermöglichbar ist.

Elektrische Motoren erzeugen Geräusche und Schwingungen, die insbesondere bei einem Einsatz in Kraftfahrzeugen zu ungewollten Geräuschen führen können. Zur akustischen Entkopplung werden gummielastische Lager eingesetzt, die den Motor und/oder das den Motor umschließende Gehäuse akustisch entkoppeln. Die akustische Entkopplung erfolgt dabei gegen eine Trägerkomponente, mit der die Antriebseinheit zur Positionierung und Lagerung im Kraftfahrzeug verbunden ist.

Als Trägerkomponente können beispielsweise separate Türmodule dienen, die Trägerkomponente kann aber auch unmittelbar aus zum Beispiel einem Türblech und/oder einer Seitenverkleidung gebildet werden. Die Trägerkomponente nimmt dabei die Antriebseinheit auf, wobei die Antriebseinheit über das gummielastische Lager und mittels eines Fügemittels an der Trägerkomponente befestigbar ist.

Wird im Sinne der Erfindung von einem Fügen bzw. Einfügen des gummielastischen Lagers in die Trägerkomponente gesprochen, so können unterschiedliche Formen der Anbindung zwischen dem gummielastischen Lager und der Trägerkomponente umfasst sein. Einerseits kann ein unmittelbares Eingreifen des gummielastischen Werkstoffs des Lagers in die Trägerkomponente erfolgen, es ist aber auch vorstellbar, dass beispielsweise Fügemittel am gummielastischen Lager an- oder ausgeformt sind, die, zum Beispiel auch aus unterschiedlichen Werkstoffen hergestellt, mit der Trägerkomponente verbindbar sind. Beispielhaft ist hier eine zum Beispiel kugelförmige Erstreckung aus Kunststoff oder Metall zu nennen, die an das gummielastische Lager angeformt oder mit dem gummielastischen Lager verbunden ist, wobei die kugelförmige Erstreckung beispielsweise in eine korrespondierende Öffnung der Trägerkomponente einfügbar ist.

Das Lager weist eine Vertiefung auf und das Fügehilfsmittel reicht zumindest bereichsweise in die Vertiefung hinein. Das ist Lager hohlzylinderförmig aufgebaut, wobei die als Hohlzylinder beschreibbare Form des Lagers eine entkoppelte Befestigung des Bauteils, insbesondere der Antriebseinheit, ermöglicht. Durch die Hohlzylinderform kann eine hohe Elastizität erzielbar sein, die ein Entkoppeln von zum Beispiel Schwingungen der Antriebseinheit auf die Trägerkomponente unterstützt. Reicht nun das Fügehilfsmittel in die Vertiefung bzw. den Hohlraum des Lagers hinein, so kann mittels des Fügehilfsmittels eine Kraft in das Innere des Lagers übertragen werden. Anzumerken bleibt hier, dass das Lager natürlich hohlzylinderförmig ausbildbar ist, bevorzugt ist die Vertiefung aber als geschlossene Hohlzylinderform ausgebildet, so dass sich eine geschlossene Vertiefung im Lager ergibt. Mittels des Fügehilfsmittel kann auf die Vertiefung eine Kraft ausgeübt werden, so dass die Vertiefung beim Fügen in die Trägerkomponente eine zusätzliche Kraftkomponente, das heißt eine sekundäre Kraft und/oder Fügekomponente, erfahren kann bzw. eine Kraftkomponente zur Verfügung steht.

Das Fügehilfsmittel endet mit einem Abstand zu einem Ende der Vertiefung, wobei der Abstand der Elastizität des elastischen Lagers entspricht. Durch die Ausbildung der kooperierenden Partner, das heißt des Fügehilfsmittels und des elastischen Lagers kann das Fügen sicherer und auch an schwer zugänglichen Stellen des Kraftfahrzeugs ermöglicht werden. Ist nun das elastische Lager mit einer Vertiefung ausgestattet, so dass das Lager einen Hohlkörper bildet, und reicht das Fügehilfsmittel in die Vertiefung hinein und endet so weit vor dem Ende der Vertiefung, das heißt vor dem Ende der Vertiefung des Hohlkörpers, dass der Abstand zwischen dem Fügehilfsmittel und dem Ende der Vertiefung auf die Elastizität des elastischen Lagers abgestimmt ist, so kann einerseits das Einfügen oder Fügen des Lagers ermöglicht werden und gleichzeitig kann das elastische Lager maximal verformt werden. Mit anderen Worten wird das elastische Lager durch das Fügehilfsmittel nicht in seiner Elastizität beschränkt. Abhängig vom eingesetzten Kunststoff, wie beispielsweise Naturkautschuk, als elastischer Werkstoff für das Lager und insbesondere als gummielastisches Lager, können die Dämpfungseigenschaften des Lagers variieren beziehungsweise variiert werden.

Wesentliche Aufgabe des Lagers ist die akustische Entkopplung zwischen dem Bauteil und der Trägerkomponente im Kraftfahrzeug. Dabei können durch eine Betätigung des Bauteils und/oder zum Beispiel durch einen elektrischen Antrieb, der im Bauteil angeordnet ist, Schwingungen oder Bewegungen erzeugt werden, die von der Trägerkomponente mittels des mindestens einen Lagers entkoppelt werden. Ist das Fügehilfsmittel dabei so weit vom Ende der Vertiefung des Hohlkörpers des Lagers entfernt, dass das elastische Lager stets seiner maximalen Elastizität entsprechend verformbar ist, so kann das Fügehilfsmittel während des Einfügens des Lagers in die Trägerkomponente zwar als Fügehilfsmittel dienen, während der eigentlichen Funktion des Lagers als Befestigungsmittel kann das Lager aber ungehindert eine elastische Entkopplung für das Bauteil bereitstellen.

Eine weitere vorteilhafte Ausgestaltungsvariante der Erfindung ergibt sich dann, wenn das elastische Lager zumindest bereichsweise Einformungen, insbesondere Radialnuten, aufweist und die Vertiefung bis in den Bereich der Einformung hineinreicht. Das elastische Lager kann zum Beispiel mit der Trägerkomponente mittels Radialnuten, das heißt schlitzförmigen Einformungen am Umfang, mit der Trägerkomponente verbunden werden. Ist dabei beispielsweise in der Trägerkomponente eine Öffnung in Form einer Bohrung vorgesehen, und weist das elastische Lager eine Ringnut auf, die sich formschlüssig in die Bohrung einfügt, so kann ein sicheres Halten mittels des elastischen Lagers erzielbar sein. Reicht nun das Fügehilfsmittel so weit in die Vertiefung hinein, dass die maximale Elastizität des Lagers gewährleistet ist und reicht die Vertiefung bis in den Bereich der Einformungen des Lagers, so kann das Fügehilfsmittel das Lager durch die Bohrung hindurchdrücken und somit ein leichtes und sicheres Montieren des Lagers gewährleisten. Hindurchdrücken meint, dass während des Fügens des elastischen Lagers das Fügehilfsmittel eine Kraft auf das Ende der Vertiefung im Lager ausübt, so dass die ringförmige Nut im elastischen Lager in die Bohrung sicher einführbar ist. Das Fügehilfsmittel dient dabei zur definierten Krafteinleitung während des Einfügens des Lagers in die Trägerkomponente.

In einer weiteren Ausgestaltungsvariante der Erfindung ergibt sich dann ein Vorteil, wenn eine geometrische Form des Endes der Vertiefung mit einer geometrischen Form das Fügehilfsmittel kooperiert, insbesondere formschlüssig in die geometrische Form des Lagers eingreift. Durch eine kooperierende Form zwischen der Vertiefung bzw. dem Hohlraum in dem Lager und der entsprechenden geometrischen Ausbildung des Fügehilfsmittels kann ein zusätzliches Sicherungsmittel zum Fügen des Lagers in die Trägerkomponente bereitgestellt werden. Insbesondere in dem Fall, in dem das Lager eine umfängliche Verbindung mit der Trägerkomponente eingeht, kann mittels des Fügehilfsmittels eine gleichmäßige Kraftverteilung in das Ende der Vertiefung eingeleitet werden.

Ist der Hohlraum im Lager beispielsweise rund ausgeformt, so kann mittels eines runden Endes des Fügehilfsmittels eine gleichmäßige umfängliche Kraft in das Lager beim Fügen eingeleitet werden. Durch die übereinstimmenden Formen der Vertiefung und des Fügehilfsmittels kann gleichzeitig die Sicherheit beim Fügen gesteigert werden, da durch eine angepasste Form zwischen Fügehilfsmittel und Lager das Lager minimal belastet wird, so dass mittels des Fügehilfsmittels keine Beschädigungen in das Lager während des Fügens eingebracht werden können, bzw. die Gefahr einer Beschädigung des Lagers auf ein Minimum reduziert wird. Sind runde, eckige, sternförmige oder andere geometrische Formen zwischen dem Fügehilfsmittel und dem Ende der Vertiefung im Lager vorstellbar, so ist es auch vorstellbar, dass die kooperierenden Oberflächen zwischen Fügehilfsmittel und dem Ende der Vertiefung formschlüssig ineinandergreifen. So kann beispielsweise das Fügehilfsmittel eine Wölbung aufweisen, die in eine konvexe Form des Endes des Lagers eingreift. Somit wird ein Maximum an Sicherheit beim Fügen des Lagers in die Trägerkomponente bereitgestellt.

Ist das Fügehilfsmittel derart ausgebildet, dass das elastische Lager im montierten Zustand unabhängig vom Fügemittel verformbar ist, so ergibt sich eine weitere vorteilhafte Ausgestaltungsvariante der Erfindung. Das Fügehilfsmittel erstreckt sich vorzugsweise in das Innere des elastischen Lagers, und zwar derart, dass lediglich der Bereich des elastischen Lagers mittels des Fügehilfsmittels mit einer Kraft beaufschlagbar ist, der mit der Trägerkomponente zu fügen ist. Vorzugsweise ist das elastische Lager symmetrisch und beispielsweise rund ausgeformt und weist einen ersten Befestigungsteil am Gehäuse und einen zweiten Befestigungsteil an der Trägerkomponente auf. Zwischen dem ersten und zweiten Befestigungsteil des elastischen Lagers können wie bereits vorstehend beschrieben können konstruktiv unterschiedliche Ausbildungen des elastischen Lagers vorliegen.

Vorzugsweise ist das elastische Lager hohl ausgebildet und als zylinderförmig beschreibbar, wobei die Zylinderform natürlich Absätze und/oder zum Beispiel einen ziehharmonikaartigen Übergangsbereich aufweisen kann. Dieser elastische Bereich zwischen dem ersten und zweiten Befestigungsteil des elastischen Lagers dient vornehmlich zur Aufnahme der Schwingungen aus dem Bauteil und zur Entkopplung des Bauteils von der Trägerkomponente. Das Fügehilfsmittel ist dabei derart ausgebildet, dass eine elastische Verformung des Lagers uneingeschränkt vollzogen werden kann, so dass das Fügehilfsmittel im Falle eines Fügens in vorteilhafter Weise den zweiten Teil des elastischen Lagers mit der Trägerkomponente verbinden kann, aber gleichzeitig keine Einschränkung in Bezug auf die elastische Entkopplung herbeiführt.

Darüber hinaus kann das Fügehilfsmittel aber als Sicherungselement dienen, nämlich dann, wenn beispielsweise das zu entkoppelnde Bauteil einer starken oder übermäßigen Belastung ausgesetzt wird, so dass die Elastizität des Lagers übermäßig stark beansprucht wird. In diesem Fall kann das Fügehilfsmittel zum Beispiel den Zwischenbereich zwischen dem ersten und zweiten Verbindungsteil des Lagers stützen und somit als zusätzliches Stützmittel im elastischen Lager dienen.

Eine weitere vorteilhafte Ausgestaltungsvariante ergibt sich dann, wenn das elastische Lager zwischen einem ersten und zweiten Gehäuseteil des Gehäuses montierbar ist. In vorteilhafter Weise kann das Gehäuse des Bauteils mehrteilig ausgebildet sein, so dass das Lager zwischen einem ersten Gehäuseteil und einem zweiten Gehäuseteil aufnehmbar ist. Dies kann in mehrfacher Hinsicht vorteilhaft sein, einerseits wird die Montage des Lagers erleichtert, wobei auch eine automatisierte Montage ermöglichbar ist, und gleichzeitig kann mittels des zweiten Gehäuseteils eine unmittelbare Einbindung des Fügehilfsmittels ermöglichen. Einerseits kann das Fügehilfsmittel als separates Bauteil an das zum Beispiel zweite Gehäuseteil montiert sein, es ist aber auch vorstellbar, dass das Fügehilfsmittel einstückig mit dem zweiten Gehäuseteil ausbildbar ist. Darüber hinaus kann in vorteilhafter Weise das zweite Gehäuseteil als Führungs- und/oder Positioniermittel für das Lager bei der Montage dienen. Dabei kann beispielsweise eine mit dem Lager korrespondierende Kontur und/oder Ausnehmung in dem zweiten Gehäuseteil vorhanden sein, um das Lager sicher zu positionieren. Vorstellbar ist es auch, dass einerseits das zweite Gehäuseteil eine Aufnahmefläche für das Lager bietet und gleichzeitig das erste Gehäuseteil das Lager fixiert. Dabei kann das elastische Lager zwischen dem ersten und zweiten Gehäuseteil formschlüssig haltbar sein.

Ist das Fügehilfsmittel einstückig mit dem zweiten Gehäuseteil ausgebildet, so ergibt sich eine vorteilhafte Ausgestaltungsvariante der Erfindung. Die Ausbildung des Fügehilfsmittels als Bestandteil des zweiten Gehäuseteils bietet den Vorteil, dass mit einer geringstmöglichen Anzahl von Bauteilen zu arbeiten ist. Darüber hinaus kann das Fügehilfsmittel sehr genau in Bezug auf das elastische Lager ausgerichtet werden, da die Positionierung des Fügehilfsmittels unmittelbar mit der Fertigung des zweiten Gehäuseteils zusammenfällt. Darüber hinaus ergeben sich günstige Kräfteverläufe bei einer Montage des Lagers an der Trägerkomponente.

In einer weiteren, nicht erfindungsgemäßen Ausgestaltungsvariante ist das Funktionseinheit einstückig mit dem elastischen Lager ausbildbar. Vorstellbar ist es erfindungsgemäß auch, dass das elastische Lager selbst mit einem Fügehilfsmittel ausgestaltet ist. Dabei kann das Fügehilfsmittel zum Beispiel im Inneren des elastischen Lagers angeordnet sein, so dass eine Kraftübertragung von einem ersten Teil des Lagers auf ein zweites Teil des Lagers übertragbar ist. Eine einstückige Ausbildung des elastischen Lagers mit dem Fügehilfsmittel reduziert die Anzahl der notwendigen Bestandteile auf ein Minimum.

Weist das elastische Lager ein Verbindungsglied, insbesondere ein ziehharmonikaartiges Verbindungsglied auf, so ergibt sich eine weitere Ausgestaltungsvariante der Erfindung. Ein ziehharmonikaartiges Verbindungsglied zwischen dem ersten und zweiten Teil des elastischen Lagers kann zum Toleranzausgleich dienen und ist gleichzeitig in der Lage, eine günstige Entkopplung für das Bauteil in Bezug auf die Trägerkomponente bereitzustellen. Neben einem Aufbau des Verbindungsglieds in Form einer Ziehharmonika sind natürlich auch unterschiedliche Wanddicken im Lager vorstellbar und/oder ein stufenförmiger Aufbau im Verbindungsglied ausbildbar. Je nach konstruktiven Vorgaben und notwendigen Kräften, die aufgenommen werden müssen, kann eine Ausbildung in Bezug auf die Elastizität des Lagers vorgenommen werden.

Nachfolgend wird die Erfindung unter Bezugnahme auf die anliegenden Zeichnungen anhand bevorzugter Ausführungsbeispiele näher erläutert. Es gilt jedoch der Grundsatz, dass die Ausführungsbeispiele die Erfindung nicht beschränken, sondern lediglich Ausführungsformen darstellen. Die dargestellten Merkmale können einzeln oder in Kombination mit weiteren Merkmalen der Beschreibung wie auch den Patentansprüchen einzeln oder in Kombination ausgeführt werden.

Es zeigt:
- Figur 1: eine Ausbildung eines hohlprofilförmigen Lagers in einer Anordnung zwischen einer Trägerkomponente und einem Gehäuse,
- Figur 2: eine weitere Ausgestaltungsvariante in einer Seitenansicht und im Schnitt mit einem Lager zwischen einem Gehäuse und einer Trägerkomponente, wobei das Lager mit einer Kugelkopfverbindung in Bezug auf die Trägerkomponente wiedergegeben ist, und
- Figur 3: eine weitere Seitenansicht und ein Ausführungsbeispiel eines Lagers zwischen einem Gehäuse und einer Trägerkomponente mit einem einstückig ausgebildeten Fügehilfsmittel als Bestandteil des elastischen Lagers.

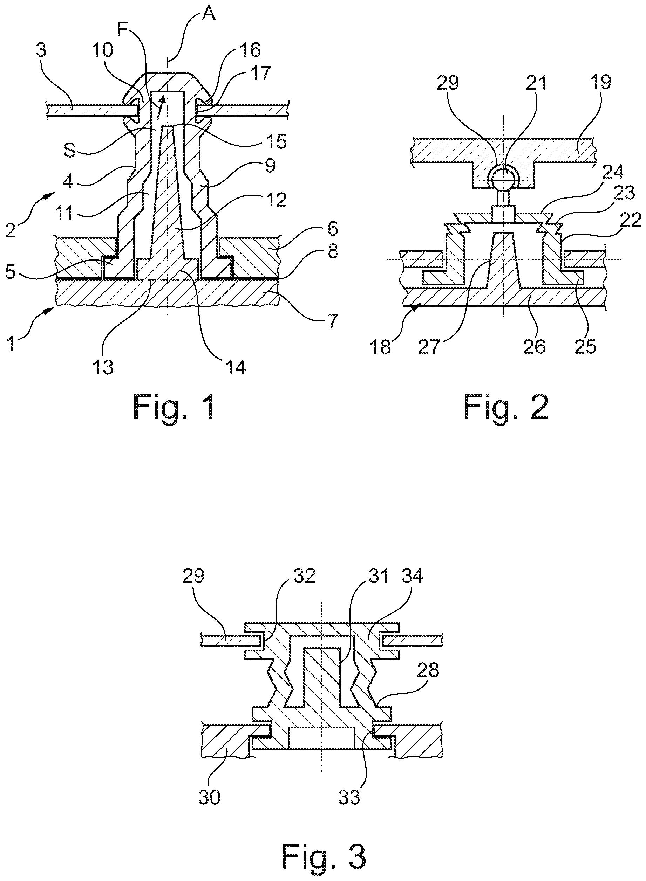

In der Figur 1 ist eine Antriebseinheit 1 lediglich bereichsweise und im Bereich einer entkoppelten Befestigung an einer Trägerkomponente 3 wiedergegeben. Die Figur 1 zeigt dabei einen Schnitt durch ein gummielastisches Lager 4, wobei das gummielastische Lager 4 mit einem ersten Teilbereich 5 zwischen einem ersten Gehäuseteil 6 und einem zweiten Gehäuseteil 7 im Gehäuse 8 aufgenommen ist. Das gummielastische Lager 4 erstreckt sich ausgehend vom ersten Teilbereich über ein Verbindungsglied 9 bis zu einem zweiten Teilbereich 10 hin zur Trägerkomponente 3. Das gummielastische Lager 4 ist in dieser Ausführungsform als Hohlprofil mit einer Vertiefung 11 ausgebildet. Das gummielastische Lager 4 ist in der Figur 1 im Schnitt und in einer Seitenansicht wiedergegeben, wobei das gummielastische Lager 4 in diesem Ausführungsbeispiel als zylindrisch bzw. rund beschreibbar ist. Dabei bildet das Verbindungsglied 9 ein stufenförmiges Hohlzylinderprofil.

In die Vertiefung 12 hinein erstreckt sich ein Fügehilfsmittel 12. In diesem Ausführungsbeispiel ist das Fügehilfsmittel 12 einstückig mit dem zweiten Gehäuseteil 7 ausgebildet, es ist aber auch vorstellbar, dass das Fügehilfsmittel 12 entlang einer Trennlinie 13 als separates Bauteil mit dem zweiten Gehäuseteil 7 verbindbar ist. In diesem Fall wäre das Fügehilfsmittel 12 als separates Bauteil mit dem zweiten Gehäuseteil verbindbar. Das Fügehilfsmittel 12 erstreckt sich ausgehend vom ersten Teilbereich 5 des gummielastischen Lagers durch das Verbindungsglied 9 hindurch bis in den Bereich des zweiten Teilbereichs 10des gummielastischen Lagers 4. Wie mit der Symmetrieachse H angedeutet, ist zumindest das gummielastische Lager 4 und das Fügehilfsmittel 12 symmetrisch aufgebaut.

In jedem Fall erstreckt sich das Fügehilfsmittel 12 ausgehend vom ersten Teilbereich 5, in dem das Lager 4 Elektromotor ersten Gehäuseteil 6 und dem zweiten Gehäuseteil 7 und einer Erstreckung 14 eingebunden bzw. fixiert ist, in das Verbindungsglied 9 hinein. Dabei ist die Form des Fügehilfsmittels 12 derart gewählt, dass das Lager 4 im Rahmen der entkoppelnden Bewegung zwischen dem Gehäuse 8 und der Trägerkomponente 3 unabhängig vom Fügehilfsmittel 12 agiert. Mit anderen Worten wird das gummielastische Lager 4 im Rahmen der Entkopplung der Antriebseinheit 1 von der Trägerkomponente 3 nicht vom Fügehilfsmittel beeinträchtigt.

Ein axiales Ende 15 des Fügehilfsmittels 12 erstreckt sich bis in den zweiten Teilbereich 10 des Lagers 4. Der zweite Teilbereich 10 ist dabei auch als Fügebereich 10 beschreibbar. Im Fügebereich 10 ist eine umlaufende Ringnut 16 in das Lager 4 eingeformt, die eine Bohrung 17 in der Trägerkomponente 3 umfänglich umschließt und in der die umlaufende Ringnut 16 gehalten ist. Der Fügebereich 10 fügt sich somit formschlüssig in die Trägerkomponente 3 ein. In vorteilhafter Weise besteht durch die Ringnut 16 die Möglichkeit, das Lager 4 auch mit Trägerkomponenten 3 unterschiedlicher Dicke zu verbinden, so dass das elastische Lager 4 vielfach in unterschiedlichen Bereichen des Fahrzeugs einsetzbar ist.

Wie deutlich in der Figur 1 zu erkennen, kann mittels des Fügehilfsmittels 12 eine Kraft F in den Fügebereich 10 eingeleitet werden, um den Fügebereich 10 sicher mit der Trägerkomponente 3 zu verbinden. Dabei weist das axiale Ende 15 ein ausreichendes Spiel S auf, um einerseits ein leichtes Fügen des Fügebereichs 10 zu ermöglichen und andererseits die Elastizität des Lagers 4 nicht zu beeinträchtigen. Mittels des Fügehilfsmittels 12 kann somit ein leichtes und sicheres Fügen des Lagers 4 in die Trägerkomponente 3 gewährleistet werden.

In der Figur 2 ist eine alternative Ausführungsform einer Verbindung zwischen einer Antriebseinheit 18 und einer Trägerkomponente 19 wiedergegeben. Die Trägerkomponente 19 weist eine kugelförmige Ausnehmung 20 auf, in die ein Kugelkopf 21 formschlüssig einfügbar ist. Der Kugelkopf 21 kann dabei beispielsweise aus Kunststoff oder Metall gefertigt sein. Eine vorteilhafte Werkstoffpaarung ergibt sich dann, wenn die Trägerkomponente 19 aus Kunststoff und der Kugelkopf 21 aus einem metallischen Werkstoff gebildet ist. Der Kugelkopf 21 ist mit einem gummielastischen Lager 22 zum Beispiel stoffschlüssig verbunden. Das gummielastische Lager 22 weist ein ziehharmonikaartiges Verbindungsglied 23 auf, das den zweiten Teilbereich 24 des gummielastischen Lagers 22 mit dem ersten Teilbereich 25 verbindet. An ein zweites Gehäuseteil 26 ist wiederum ein Fügehilfsmittel 27 einstückig angeformt, so dass bei einer Montage der Antriebseinheit 18 das Fügen des Kugelkopfs 21 erleichtert und mittels einer Kraft aus dem Fügehilfsmittel 27 unterstützbar ist.

In der Figur 3 ist eine alternative, nicht erfindungsgemäße Ausführungsform eines gummielastischen Lagers 28 wiedergegeben. Das gummielastische Lager 28 verbindet dabei eine Trägerkomponente 29 mit einem Gehäuse 30, wobei in diesem Ausführungsbeispiel das Fügehilfsmittel 31 einstückig mit dem gummielastischen Lager 28 ausgebildet ist. In diesem Ausführungsbeispiel weist das gummielastische Lager 28 zwei umlaufende Ringnuten 32, 33 auf, wobei eine erste Ringnut 23 mit dem Gehäuse 30 verbindbar ist und eine zweite Ringnut 32 mit der Trägerkomponente 29 verbindbar ist. Üblicherweise wird das gummielastische Lager 28 mit dem Gehäuse 30 der Antriebseinheit verbunden und an die Trägerkomponente 29 montiert. Beim Fügen des elastischen Lagers 28 kann nun mittels des Fügehilfsmittels 31 ein sicheres und leichtes Fügen des Fügebereichs 34 des gummielastischen Lagers 28 unterstützt und erzielt werden.

### Bezugszeichenliste

- 1, 18: Antriebseinheit
- 2: entkoppelte Befestigung
- 3, 19, 29: Trägerkomponente
- 4, 22, 28: gummielastisches Lager
- 5, 25: erster Teilbereich
- 6: erster Gehäuseteil
- 7, 26: zweiter Gehäuseteil
- 8, 30: Gehäuse
- 9, 23: Verbindungsglied
- 10, 24, 34: zweiter Teilbereich, Fügebereich
- 11: Vertiefung
- 12, 27, 31: Fügehilfsmittel
- 13: Trennlinie
- 14: Erstreckung
- 15: axiales Ende
- 16, 32, 33: Ringnut
- 17: Bohrung
- 20: Ausnehmung
- 21: Kugelkopf

- A: Symmetrieachse
- F: Kraft
- S: Spiel

## Patentansprüche

1. Gummielastisches Lager (4, 22, 28) zur entkoppelten Befestigung eines Bauteils, insbesondere einer Antriebseinheit (1, 18), in einem Fahrzeug, insbesondere einem Kraftfahrzeug, wobei das elastische Lager (4, 22, 28) zwischen einem Gehäuse (8, 30) des Bauteils und einer Trägerkomponente (3, 19, 29) montierbar ist und das elastische Lager (4, 22, 28) zumindest mittelbar in der Trägerkomponente (3, 19, 29) formschlüssig haltbar ist, wobei ein Fügehilfsmittel (12, 27, 31) für das Lager (4, 22, 28) vorgesehen ist, so dass ein sicheres Fügen, insbesondere Einfügen, der formschlüssigen Verbindung mit der Trägerkomponente (3, 19, 29) erzielbar ist, **wobei** das elastische Lager (4, 22, 28) hohlzylinderförmig aufgebaut ist und eine als geschlossene Hohlzylinderform ausgebildete Vertiefung (11) aufweist und das Fügehilfsmittel (12, 27, 31) zumindest bereichsweise in die Vertiefung (11) hineinreicht,
**dadurch gekennzeichnet, dass**
das Fügehilfsmittel (12, 27, 31) mit einem Abstand zu einem Ende der Vertiefung (11) endet, wobei der Abstand zwischen dem Fügehilfsmittel (12, 27, 31) und dem Ende der Vertiefung (11) auf die Elastizität des elastischen Lagers (4, 22, 28) abgestimmt ist, so dass das elastische Lager maximal verformt werden kann.

2. Gummielastisches Lager (4, 22, 28) nach Anspruch 1, **dadurch gekennzeichnet, dass** das elastische Lager (4, 22, 28) zumindest bereichsweise Einformungen, insbesondere Radialnuten (16, 32, 33), aufweist und dass die Vertiefung (11) bis in den Bereich der Einformung hineinreicht.

3. Gummielastisches Lager nach einem der Ansprüche 1 bis 2, **dadurch gekennzeichnet, dass** eine geometrische Form des Endes der Vertiefung (11) mit einer geometrischen Form des Fügehilfsmittels (12, 27, 31) kooperiert, insbesondere formschlüssig in die geometrische Form des Lagers (4, 22, 28) eingreift.

4. Gummielastisches Lager (4, 22, 28) nach einem der Ansprüche 1 bis 3, **dadurch gekennzeichnet, dass** das Fügehilfsmittel (12, 27, 31) derart ausgebildet ist, dass das elastische Lager (4, 22, 28) im montierten Zustand unabhängig vom Fügehilfsmittel (12, 27, 31) verformbar ist.

5. Elastisches Lager (4, 22, 28) nach einem der Ansprüche 1 bis 4, **dadurch gekennzeichnet, dass** das elastische Lager (4, 22, 28) zwischen einem ersten und einem zweiten Gehäuseteil (6, 7, 26) des Gehäuses (8, 30) im Gehäuse (8, 30) montierbar ist.

6. Gummielastisches Lager nach Anspruch 5, **dadurch gekennzeichnet, dass** das Fügehilfsmittel (12, 27, 31) einstückig mit dem zweiten Gehäuseteil (7, 26) ausbildbar ist.

7. Gummielastisches Lager nach einem der Ansprüche 1 bis 6, **dadurch gekennzeichnet, dass** das Lager (4, 22, 28) ein Verbindungsglied (9, 23), insbesondere ein ziehharmonikaartiges Verbindungsglied (9, 23) aufweist.

## Claims

1. Rubber-elastic bearing (4, 22, 28) for the decoupled fastening of a component, in particular a drive unit (1, 18), in a vehicle, in particular a motor vehicle, it being possible for the elastic bearing (4, 22, 28) to be installed between a housing (8, 30) of the component and a carrier component (3, 19, 29) and for the elastic bearing (4, 22, 28) to be held interlockingly at least indirectly in the carrier component (3, 19, 29), a joining aid (12, 27, 31) being provided for the bearing (4, 22, 28), such that secure joining, in particular insertion, of the interlocking connection to the carrier component (3, 19, 29) can be achieved, the elastic bearing (4, 22, 28) being hollow-cylindrical and having a recess (11) in the form of a closed hollow cylinder and the joining aid (12, 27, 31) extending into the recess (11) at least in regions,
**characterized in that**
the joining aid (12, 27, 31) ends at a distance from one end of the recess (11), the distance between the joining aid (12, 27, 31) and the end of the recess (11) being matched to the elasticity of the elastic bearing (4, 22, 28), so that the elastic bearing can be deformed to the maximum.

2. Rubber-elastic bearing (4, 22, 28) according to claim 1, **characterized in that** the elastic bearing (4, 22, 28) has indentations, in particular radial grooves (16, 32, 33), at least in regions, **and in that** the recess (11) extends into the region of the indentation.

3. Rubber-elastic bearing according to any of claims 1 to 2,
**characterized in that** a geometric shape of the end of the recess (11) cooperates with a geometric shape of the joining aid (12, 27, 31), in particular interlockingly engages into the geometric shape of the bearing (4, 22, 28).

4. Rubber-elastic bearing (4, 22, 28) according to any of claims 1 to 3,
**characterized in that** the joining aid (12, 27, 31) is designed such that the elastic bearing (4, 22, 28) is deformable in the installed state regardless of the joining aid (12, 27, 31).

5. Elastic bearing (4, 22, 28) according to any of claims 1 to 4,
**characterized in that** the elastic bearing (4, 22, 28) can be installed in the housing (8, 30) between a first and a second housing part (6, 7, 26) of the housing (8, 30).

6. Rubber-elastic bearing according to claim 5,
**characterized in that** the joining aid (12, 27, 31) can be formed in one piece with the second housing part (7, 26).

7. Rubber-elastic bearing according to any of claims 1 to 6,
**characterized in that** the bearing (4, 22, 28) has a connection element (9, 23), in particular an accordion-like connection element (9, 23).

## Revendications

1. Support élastique (4, 22, 28) en caoutchouc pour la fixation désolidarisée d'une pièce, en particulier d'une unité d'entraînement (1, 18), dans un véhicule, en particulier un véhicule automobile, dans lequel le support élastique (4, 22, 28) peut être monté entre un boîtier (8, 30) de la pièce et un composant de soutien (3, 19, 29) et le support élastique (4, 22, 28) peut être maintenu au moins indirectement dans le composant de soutien (3, 19, 29) par complémentarité de forme, dans lequel un moyen auxiliaire d'assemblage (12, 27, 31) est prévu pour le support (4, 22, 28), de sorte qu'un assemblage sûr, en particulier un emboîtement, de la liaison par complémentarité de forme avec le composant de soutien (3, 19, 29) peut être obtenu, dans lequel le support élastique (4, 22, 28) est conçu en forme de cylindre creux et présente un renfoncement (11) réalisé sous forme de cylindre creux fermé et le moyen auxiliaire d'assemblage (12, 27, 31) pénètre au moins dans certaines zones dans le renfoncement (11), **caractérisé en ce que**
le moyen auxiliaire d'assemblage (12, 27, 31) se termine à une certaine distance par rapport à une extrémité du renfoncement (11), dans lequel la distance entre le moyen auxiliaire d'assemblage (12, 27, 31) et l'extrémité du renfoncement (11) est adaptée à l'élasticité du support élastique (4, 22, 28), de sorte que le support élastique peut être déformé au maximum.

2. Support élastique (4, 22, 28) en caoutchouc selon la revendication 1,
**caractérisé en ce que** le support élastique (4, 22, 28) présente, au moins dans certaines zones, des creux, en particulier des rainures radiales (16, 32, 33), **et en ce que** le renfoncement (11) s'étend jusque dans la zone du creux.

3. Support élastique en caoutchouc selon l'une des revendications 1 à 2,
**caractérisé en ce qu'**une forme géométrique de l'extrémité du renfoncement (11) coopère avec une forme géométrique du moyen auxiliaire d'assemblage (12, 27, 31), en particulier vient en prise par complémentarité de forme dans la forme géométrique du support (4, 22, 28).

4. Support élastique (4, 22, 28) en caoutchouc selon l'une des revendications 1 à 3, **caractérisé en ce que** le moyen auxiliaire d'assemblage (12, 27, 31) est réalisé de telle sorte que le support élastique (4, 22, 28) est déformable à l'état monté indépendamment du moyen auxiliaire d'assemblage (12, 27, 31).

5. Support élastique (4, 22, 28) selon l'une des revendications 1 à 4,
**caractérisé en ce que** le support élastique (4, 22, 28) peut être monté dans le boîtier (8, 30) entre une première et une seconde partie de boîtier (6, 7, 26) du boîtier (8, 30).

6. Support élastique en caoutchouc selon la revendication 5,
**caractérisé en ce que** le moyen auxiliaire d'assemblage (12, 27, 31) peut être réalisé d'une seule pièce avec la seconde partie de boîtier (7, 26).

7. Support élastique en caoutchouc selon l'une des revendications 1 à 6,
**caractérisé en ce que** le support (4, 22, 28) présente un organe de liaison (9, 23), en particulier un organe de liaison (9, 23) en forme d'accordéon.
